(19) Europäisches Patentamt
European Patent Office
Office européen des brevets

(11) **EP 1 837 380 B1**

(12) **EUROPEAN PATENT SPECIFICATION**

(45) Date of publication and mention
of the grant of the patent:
**28.09.2011 Bulletin 2011/39**

(51) Int Cl.:
*C09C 1/64* *(2006.01)*       *C09C 3/10* *(2006.01)*
*C09D 5/29* *(2006.01)*       *C09D 7/12* *(2006.01)*
*C09D 201/00* *(2006.01)*

(21) Application number: **05809667.8**

(22) Date of filing: **28.11.2005**

(86) International application number:
**PCT/JP2005/021760**

(87) International publication number:
**WO 2006/064652 (22.06.2006 Gazette 2006/25)**

(54) **METALLIC PIGMENT AND COATING MATERIAL CONTAINING SAME**

METALLPIGMENT UND ES ENTHALTENDER BESCHICHTUNGSSTOFF

PIGMENT MÉTALLIQUE ET MATIÈRE DE REVÊTEMENT CONTENANT CELUI-CI

(84) Designated Contracting States:
**DE ES FR GB IT**

(30) Priority: **16.12.2004   JP 2004364409**

(43) Date of publication of application:
**26.09.2007   Bulletin 2007/39**

(73) Proprietor: **TOYO ALUMINIUM KABUSHIKI KAISHA**
**Osaka-shi, Osaka 541-0056 (JP)**

(72) Inventor: **TAKANO, Yasushi**
**Nara 6340007 (JP)**

(74) Representative: **GROSSE SCHUMACHER KNAUER VON HIRSCHHAUSEN**
**Patent- und Rechtsanwälte**
**Nymphenburger Strasse 14**
**80335 München (DE)**

(56) References cited:
**EP-A- 1 655 349       EP-A1- 1 445 290**
**JP-A- 2000 005 695    JP-A- 2003 064 283**
**JP-A- 2003 096 334    JP-A- 2003 213 157**
**US-A- 4 138 511**

**Description**

TECHNICAL FIELD

The present invention relates to a metallic pigment compatibly having high brilliance and corrosion resistance and a coating material containing this metallic pigment. More specifically, the present invention relates to a metallic pigment capable of excellently maintaining corrosion resistance also when a surface modifier layer is formed on the metallic pigment for improving brilliance of a coating film and a powder coating material containing this metallic pigment.

BACKGROUND ART

In recent years, a powder coating composition, drawing attention to the characteristics as a low-pollution coating material using no organic solvent, has been increasingly demanded in various industrial fields of automobile components, household appliances, furnishings, machine tools, business and office machines, building materials and toys.

The powder coating composition, generally employing no organic solvent and causing neither environmental problem nor disaster resulting from an organic solvent, can be regarded as a coating composition friendly to the global environment and humans. Further, the powder coating composition can be relatively easily recovered or cleaned with no working environmental pollution resulting from scattering/adherence in application dissimilarly to a solvent-type coating composition. In addition, the powder coating composition causes no wastewater treatment problem dissimilarly to a watersoluble coating composition.

A coating film formed by single application of the powder coating composition has a large thickness to require no repetitive wet-on-wet coating dissimilarly to a conventional solvent-type coating composition, whereby the application time can be reduced. Further, the powder coating composition contains no solvent in the coating composition, to hardly form pinholes in the coating film.

In the operation of applying the powder coating composition, further, an oversprayed coating composition can be so recovered and recycled that loss of the coating composition can be remarkably reduced, thereby reducing the cost for the application step.

In general, a powder coating composition has mostly contained no metallic pigment such as metallic powder. In such a powder coating composition containing no metallic powder, applicability and coating film characteristics of the powder coating composition have been generally excellent and not remarkably inferior to those of a general solvent-type coating composition.

In recent years, demand for a metallic coating film excellent in appearance has been increasing in various industrial fields such as the automobile industry, due to refinement of the aesthetic sense of consumers following improvement in the standards of living. In order to satisfy such requirement of the consumers, a powder coating composition providing a metallic coating film having high designability, i.e., a powder metallic coating composition formed by a powder coating material containing a metallic pigment has been developed and positively introduced into several industrial fields.

However, the powder coating composition containing a metallic pigment has such a disadvantage that the color tone of a coating film is darkened and no sufficient metallic feel is attained if the metallic pigment cannot be arranged in parallel with a substrate of the coating film. In order to overcome such a disadvantage of the powder metallic pigment composition, therefore, many efforts at research and development have been made in various fields.

Generally developed methods of preparing powder metallic coating compositions include melt blending previously sufficiently kneading a metallic flake pigment with resin or a coloring pigment by a melt process and thereafter pulverizing the mixture by crushing or the like, dry blending mixing resin powder and a flake pigment with each other and applying the mixture, a bonded process using resin powder containing a metallic flake pigment adhering to the surface thereof and the like (Japanese Patent Laying-Open No. 51-137725 (Patent Document 1), Japanese Patent Publication No. 57-035214 (Patent Document 2), Japanese Patent Laying-Open No. 09-071734 (Patent Document 3), U.S. Patent No. 4,138,511 (Patent Document 4) etc.).

In the melt blending, however, the metallic pigment is easily deformed in the kneading step or a subsequent step of adjusting the particle size of the resin powder by crushing or the like. Therefore, the appearance of a coating film obtained by applying the powder metallic coating composition prepared according to this method cannot be regarded as sufficiently excellent. If the metallic pigment is prepared from aluminum particles in this method, further, active surfaces of aluminum are disadvantageously exposed in the crushing step to result in a strong possibility of ignition or dust explosion.

The dry blending has such an advantage that the metallic pigment is relatively hardly deformed. However, the metallic pigment must be charged in application if the powder coating composition is electrostatically applied, and hence the surface of the metallic pigment must be previously coated with resin when a metallic pigment composed of aluminum particles or the like is employed as the metallic pigment. Further, the resin powder and the metallic pigment easily separate from each other in application due to the different rates of charge of the metallic pigment and the resin powder.

Therefore, designability of the coating film is reduced and the content of the metallic pigment in the powder coating composition varies before and after application, to result in such a problem that the coating material cannot be recycled in practice since the color tone changes if the coating material is reused upon recovery.

The bonded process includes a method bonding the metallic pigment to the surface of the resin powder with a brushing polisher or a method transferring and bonding the metallic pigment to the resin powder by bringing the resin powder into contact with a dispersion medium of alumina balls or the like covered with the metallic pigment. This process has such a merit that the rate of introduction of the metallic pigment into a coating film is so stable that the powder coating composition recovered in a state not bonded to a substrate can be recycled.

In this bonded process, however, the metallic pigment and the resin powder are brought into pressure contact with/bonded to each other through physical stress, and hence the metallic pigment is so easily deformed that excellent metallic feel is hardly obtained. Although resin particles advantageously hardly cause bonding (blocking) due to small bonding strength, further, it is difficult to bond the overall metallic pigment irregular in particle size distribution to the resin powder in practice and hence a large quantity of free particles of the metallic pigment remain unbonded to the resin powder.

When the quantity of the free particles of the metallic pigment is increased, the compounding ratio between the resin powder and the metallic pigment so varies when the coating material is recovered and reused that the coating material cannot be recycled after the recovery similarly to that employed in the dry blending. If a metallic pigment composed of aluminum particles or the like is employed as the metallic pigment, further, a large quantity of free particles are present in the metallic pigment, to result in a strong possibility of ignition or dust explosion.

The bonding strength between the resin powder and the metallic pigment is remarkably reduced particularly when the metallic pigment has a large particle diameter, and excellent brightness and high brilliance attained only through employment of the metallic pigment having a large particle diameter cannot be easily attained in bonded aluminum obtained by this process.

In order to solve these problems, the inventor et al. have developed a powder coating composition containing thermosetting resin powder prepared by bonding aluminum flakes to the surface through a specific bonding agent (International Patent Publication No. 02/094950 (Patent Document 5)). According to this invention, a recyclable uniform coating film exhibiting no color shading is obtained and a pigment having a large particle diameter can be used, whereby brilliance having been unattainable in the conventional bonded process can be attained. However, this brilliance is not remarkably improved as compared with the dry blending.

In order to solve this problem, the inventor has already invented a surface modifier composed of a resin composition containing a copolymer comprising a bond unit derived from a fluoric polymerizable monomer having an alkyl fluoride group and another bond unit derived from a polymerizable monomer having a phosphoric acid group. According to this method, a coating film excellent in brightness can be obtained. Although a proper coverage for a metallic pigment with this surface modifier is an extremely small quantity of several milligrams/m$^2$, electrostatic coating can be performed with the coverage of such a small quantity. The metallic pigment must be charged if the powder coating composition is electrostatically applied by dry blending as described above, and hence the surface of the metallic pigment must be previously coated with resin when a metallic pigment composed of aluminum particles or the like is employed as the metallic pigment. If the aforementioned surface modifier is employed, however, electrostatic coating can be performed with a small coat of the surface modifier even if the surface of the metallic pigment is not previously coated with resin.

On the other hand, high corrosion resistance is required in addition to the aforementioned brightness when the powder coating composition is utilized in practice. A coating film formed by single application of a powder coating composition has a large thickness to require no repetitive wet-on-wet coating dissimilarly to a conventional solvent-type coating composition as described above, whereby single baking of single application referred to as one-coat one-bake forms the mainstream. Thus, the application cost can be reduced as one of remarkable merits of the powder coating composition. In this application method, however, no overcoat layer is present on the outermost layer of the coating film and hence the metallic pigment is directly exposed to external stimulation such as a rainfall (particularly acid rain), washing with an alkaline detergent, ultraviolet exposure or a high temperature/high moisture. Therefore, corrosion of the pigment and following discoloration of the coating film are more easily caused as compared with a generally overcoated oil or water coating pigment, and higher corrosion resistance is required to the pigment.

As a method of improving corrosion resistance of a pigment, Japanese Patent Laying-Open No. 64-040566 (Patent Document 6) and European patent application EP 1 655 349 A1 (Patent Document 7), for example, proposes a method of uniformly covering a pigment with a copolymer obtained by reacting at least two materials selected from a group consisting of oligomers and polymers each having at least one polymerizable double bond. However, it is difficult to obtain a coating film excellent in brilliance only according to this method. While brilliance of a coating film is recognizably improved to a certain extent when the metallic pigment obtained according to the method of Patent Document 6 is treated with the aforementioned surface modifier and electrostatically applied, the effect of improving brilliance in this case cannot sufficiently derive the effect of the surface modifier, and no coating film having high brightness required thereto is obtained. In other words, a resin-coated coating film improving corrosion resistance so inhibits the brilliance improving effect of the surface modifier that no brilliance of an expectable level can be attained. Further, a small-quantity coating film of the surface modifier itself has no effect of improving corrosion resistance.

While powder metallic coating materials are prepared by various methods as described above, none of the methods can provide a coating film compatibly attaining metallic feel and brightness providing a sufficiently satisfactory color tone and corrosion resistance at the same time.

Patent Document 1: Japanese Patent Laying-Open No. 51-137725
Patent Document 2: Japanese Patent Publication No. 57-035214
Patent Document 3: Japanese Patent Laying-Open No. 09-071734
Patent Document 4: U.S. Patent No. 4,138,511
Patent Document 5: International Patent Publication No. 02/094950
Patent Document 6: Japanese Patent Laying-Open No. 64-040566
Patent Document 7: European Patent Application EP 1 655 349 A1

DISCLOSURE OF THE INVENTION

PROBLEMS TO BE SOLVED BY THE INVENTION

An object of the present invention is to provide a metallic pigment supplying a coating film with excellent metallic feel and high brightness as well as excellent corrosion resistance at the same time, and a coating material, particularly preferably a powder coating material, containing this metallic pigment.

MEANS FOR SOLVING THE PROBLEMS

The present invention relates to a metallic pigment provided with a coating-layer of multiple layers covering the surfaces of aluminum particles characterized in that the outermost layer of the coating-layer contains a polymer obtained by polymerizing a monomer having a basic group and at least one polymerizable double bond and at least one layer of said coating-layer other than the outermost layer is composed of a copolymer obtained by polymerizing at least two materials selected from a group consisting of oligomers and monomers each having at least one polymerizable double bond. The present invention is further characterized in that a surface modifier layer is formed on the outer side of said coating-layer, and said surface modifier layer contains a copolymer comprising a bond unit derived from a fluoric polymerizable monomer having an alkyl fluoride group and another bond unit derived from a polymerizable monomer having a phosphoric acid group.

The monomer having the basic group and at least one polymerizable double bond is preferably a compound containing nitrogen.

In the metallic pigment according to the present invention, the coating-layer is preferably formed to be in the range of 5 to 100 parts by mass with respect to 100 parts by mass of aluminum particles.

The present invention further relates to a coating material containing the metallic pigment according to the present invention.

EFFECTS OF THE INVENTION

Brilliance and corrosion resistance of the metallic pigment according to the present invention can be simultaneously improved by forming the coating-layer containing the polymer obtained by polymerizing the monomer having a basic group and at least one polymerizable double bond on the surfaces of the aluminum particles thereby increasing adhesiveness between a surface modifier and the coating-layer particularly when the surface modifier is employed.

BEST MODES FOR CARRYING OUT THE INVENTION

The present invention is now described in more detail with reference to an embodiment.

<Aluminum Particles>

The metallic pigment according to the present invention is composed of aluminum particles serving as base particles. This is because aluminum has such excellent characteristics that the same is excellent in metallic luster, low-priced and easy to handle due to the small specific gravity. As to the material for the base aluminum particles in the present invention, the main component, i.e., the component occupying at least 50 mass % of the whole may be aluminum, while the purity of aluminum is more preferably at least 99.3 mass %, and pure aluminum is particularly preferable. This is because the metallic luster of the metallic pigment is particularly improved if the purity of aluminum is at least 99.3 mass %. If the aluminum particles contain a component other than aluminum, an alloy of aluminum and another metal is preferably employed. As an example of the metal alloyed with aluminum, at least one metal selected from a group consisting of metals such as zinc, copper, bronze (copper-tin alloy), nickel, titanium and stainless can be preferably listed. An alloy of such a metal and aluminum, having relatively excellent metallic luster, can be preferably used as the base particles in the present invention.

The base aluminum particles in the present invention are not restricted in shape but may have any shape such as a granular, platy, bulk or flaky (scaly) shape, while the same are preferably flaky in order to supply a coating film with excellent brightness.

The average particle diameter of the base aluminum particles is not particularly restricted but is preferably at least 1 μm, more preferably at least 3 μm in particular. Further, the average particle diameter of the base aluminum particles is preferably not more than 100 μm, more preferably not more than 50 μm in particular. The base aluminum particles are difficult to handle in preparation steps and tend to easily aggregate if the average particle diameter of the base aluminum particles is less than I μm, while the surface of the coating film may be so roughened when the metallic pigment is used as a coating material that a preferable design cannot be implemented if the average particle diameter exceeds 100 μm.

The average thickness of the base aluminum particles is not particularly restricted but is preferably at least 0.01 μm, more preferably at least 0.02 μm in particular. Further, the average thickness of the base aluminum particles is preferably not more than 5 μm, more preferably not more than 2 μm in particular. The base aluminum particles are difficult to handle in the preparation steps and tend to easily aggregate if the average thickness of the base aluminum particles is less than 0.01 μm, while particulate feeling of the coating film is so conspicuous or hiding power is so insufficient that no preferable design can be implemented if the average thickness exceeds 5 μm.

The average particle diameter of the base aluminum particles is obtained by calculating the volume average from particle size distribution measured by a well-known particle size distribution measuring method such as laser diffraction, micromesh sieving or a Coulter counter method. The average thickness is calculated from hiding power and density of the base aluminum particles.

A grinding lubricant added in grinding may be adsorbed to the surfaces of the base aluminum particles. As an example of the grinding lubricant, aliphatic acid such as oleic acid, stearic acid, linoleic acid, linolenic acid, ricinoleic acid, elaidic acid, zoomaric acid, gadoleic acid or erucic acid, aliphatic amine, fatty amide, aliphatic alcohol, an ester or the like can be listed, for example.

The grinding lubricant has an effect of suppressing unnecessary oxidation of the surfaces of the base aluminum particles and improving the luster. The quantity of adsorption of the grinding lubricant varies with the application or the like, and is not particularly restricted but is preferably not less than 2 parts by mass with respect to 100 parts by mass of the base aluminum particles. Surface luster may be reduced if the quantity exceeds 2 parts by mass.

Further, a coloring pigment layer or a coloring layer such as an interference film may be formed on the surfaces of the base aluminum particles. The base aluminum particles can be colored by providing such coloring pigment layer or interference film, so that a coating film having specific designability can be formed.

While a coloring pigment usable for providing the coloring pigment layer is not particularly restricted, quinacridone, diketopyrrolopyrrole, isoindolinone, indanthrone, perylene, perinone, anthraquinone, dioxazine, benzoimidazolone, triphenylmethanequinophthalone, anthrapyrimidine, chrome yellow, pearl mica, transparent pearl mica, coloring mica, interference mica, phthalocyanine, phthalocyanine halide, an azo pigment (azomethine metal complex, condensed azo or the like), titanium oxide, carbon black, iron oxide, copper phthalocyanine, a condensed polycyclic pigment or the like can be listed, for example.

While a method of providing the interference film is not particularly restricted, a method sputtering the surfaces of the base aluminum particles with a thin film of a dissimilar metal can be listed, for example. While the dissimilar metal employed at this time is not particularly restricted, a copper alloy such as brass, an iron alloy such as stainless steel or a nickel alloy such as hastelloy can be listed in addition to gold, silver, copper, nickel, cobalt, titanium or aluminum, for example.

A method of preparing the base aluminum particles is not particularly restricted but the particles can be prepared by a well-known method. As a specific example, a method of preparing aluminum particles comprising the steps of preparing aluminum powder, preferably aluminum spherical powder by gas atomization, water atomization, a rotating disc method or melt spinning and grinding the aluminum powder by well-known ball milling can be listed.

<Raw Monomer for Forming Outermost Layer>

A polymer forming the outermost layer of the coating-layer in the metallic pigment according to the present invention is obtained by polymerization of a monomer having a basic group and at least one polymerizable double bond, and generated as a polymer (hereinafter referred to as a basic polymer) having basic points in molecules. In the present invention, basic points denote electron pair-donating sites. This polymer includes either a homopolymer or a copolymer.

The reason why the coating film excellently compatibly attains brilliance and corrosion resistance when a polymerizable monomer having a basic group is used as the raw material for forming the outermost layer of the coating-layer in the present invention can be estimated as follows: In a metallic pigment prepared by forming a surface modifier layer of a fluoric polymer having a phosphoric acid group on the surfaces of aluminum particles, affinity between another component in a coating material and the surface of the metallic pigment is reduced due to contribution of the polymer and the metallic pigment is oriented on the surface of the coating film for improving brilliance of the coating film while adsorptivity of the surface modifier layer for the aluminum particles is improved due to contribution of the phosphoric acid groups and the surface modifier layer is uniformly formed.

When the coating-layer is formed between the base aluminum particles and the surface modifier in order to further supply the metallic pigment provided with the surface modifier layer with corrosion resistance, adsorptivity between the surface modifier layer and the coating-layer is so deteriorated that the surface modifier layer is not uniformly formed and the polarity of unadsorbable phosphoric acid groups may attenuate water repellency of the fluoric polymer to reduce the brilliance of the coating film if the interaction between the surface modifier layer and the coating-layer is weak. In this case, the coating-layer interposed between the base aluminum particles and the surface modifier layer is not sufficiently effective. In the present invention, the basic points serving as adsorption sites of the surface modifier layer for the phosphoric acid groups can be formed on the surface of the coating-layer by forming the coating-layer containing the polymer obtained by polymerizing the monomer having the basic group. Therefore, strong adsorption between the surface modifier layer and the coating-layer can be attained due to acid-base interaction. The phosphoric acid groups of the surface modifier layer are oriented on the interfaces between the surface modifier layer and the coating-layer due to this acid-base interaction, whereby the water repellency of the fluoric polymer is so sufficiently exhibited that high brilliance is conceivably implemented due to a leafing effect upon formation of the coating film.

Therefore, the monomer having the basic group used in the present invention, aimed at ensuring basic points on the surface of the coating-layer, may simply satisfy such a condition that the same is basic and can serve as a component of coating resin. In consideration of industrial production, however, the monomer having the basic group and at least one polymerizable double bond is preferably a compound containing nitrogen in view of the cost and polymerization. More specifically, (meth)acrylic ester of tertiary amine, vinylpyridine, vinylpyrrolidone or the like is preferable, and dimethylaminoethyl (meth)acrylate, diethylaminoethyl (meth)acrylate or the like is more preferable. However, the present invention is not restricted to these.

While the monomer serving as the raw material for forming the outermost layer may contain only the polymerizable monomer having the basic group and at least one polymerizable double bond, this monomer may further contain another monomer or an oligomer. If the coating-layer is of the single layer, at least two materials selected from a group consisting of oligomers and monomers each having at least one polymerizable double bond are preferably contained in addition to the polymerizable monomer having the basic group and at least one polymerizable double bond. In this case, corrosion resistance of the metallic pigment can be further improved.

The content of the polymerizable monomer having the basic group and at least one polymerizable double bond is preferably at least 5 mass %, particularly preferably 10 mass % of the overall monomer and/or oligomer serving as the raw material for the polymer forming the outermost layer. If the content is less than 5 mass %, the metallic pigment tends to exhibit insufficient brilliance. Further, this content is preferably not more than 90 mass %, particularly preferably not more than 70 mass %. If this content exceeds 90 mass %, corrosion resistance of a metallic coating material may not be sufficiently attained.

<Monomer and/or Oligomer forming Inner Layer>

The metallic pigment according to the present invention is supplied with excellent corrosion resistance also when only single coating-layer is formed by a polymer obtained by polymerizing a polymerizable monomer having the basic group and at least one polymerizable double bond. However, it is preferable to form the coating-layer of multiple layers having the outermost layer of the polymer obtained by polymerizing the polymerizable monomer having the basic group and at least one polymerizable double bond and to form an inner layer of a polymer prepared from at least two materials selected from the group consisting of oligomers and monomers each having at least one polymerizable double bond between the outermost layer and the base aluminum particles, in order to attain stronger corrosion resistance. The monomer and the oligomer are now described more specifically.

As an example of the monomer having at least one polymerizable double bond, unsaturated carboxylic acid (acrylic acid, methacrylic acid, crotonic acid, itaconic acid, citraconic acid, maleic acid or maleic anhydride, for example), a nitrile thereof (acrylonitrile or methacrylonitrile, for example) or an ester thereof (methyl acrylate, ethyl acrylate, n-butyl acrylate, 2-ethylhexyl acrylate, lauryl acrylate, stearyl acrylate, hydroxyethyl acrylate, 2-hydroxypropyl acrylate, methoxyethyl acrylate, butoxyethyl acrylate, glycidyl acrylate, cyclohexyl acrylate, 1,6-hexanediol diacrylate, 1,4-butanediol diacrylate, trimethylolpropane triacrylate, tetramethylolmethane tetraacrylate, tetramethylolmethane triacrylate, methyl methacrylate, ethyl methacrylate, n-butyl methacrylate, 2-ethylhexyl methacrylate, lauryl methacrylate, stearyl methacrylate, hydroxyethyl methacrylate, 2-hydroxypropyl methacrylate, methoxyethyl methacrylate, butoxyethyl methacrylate, glycidyl methacrylate, cyclohexyl methacrylate, trimethylolpropane trimethacrylate or tetramethylolmethane trimethacrylate, for example) is preferably illustrated. Further, a cyclic unsaturated compound (cyclohexene, for example), an acyclic unsaturated compound (styrene, $\alpha$-methylstyrene, vinyltoluene, divinylbenzene, cyclohexene vinylmonoxide, divinylbenzene monoxide, vinyl acetate, vinyl propionate or diallyl benzene, for example) or the like is also preferable.

As an example of the oligomer having at least one polymerizable double bond, epoxidized 1,2-polybutadiene, acrylic denatured polyester, acrylic denatured polyether, acrylic denatured urethane, acrylic denatured epoxy, acrylic denatured spiran or the like (each having a polymerization degree of about 2 to 20) can be illustrated. In particular, epoxidized 1,2-polybutadiene or acrylic denatured polyester having a polymerization degree of 3 to 10 is preferable. Employment of the oligomer is preferable in a point that polymerization gradually progresses and reaction efficiency remarkably increases.

When a monomer and/or an oligomer having at least two polymerizable double bonds is used for the layer of the coating-layer other than the outermost layer, the corrosion resistance is particularly preferably further improved due to a cross-linking action.

<Polymer Forming Outermost Layer>

The quantity of the overall coating-layer (total coating-layer) according to the present invention including the inner layer and the outermost layer is preferably at least 5 parts by mass, more preferably at least 10 parts by mass in particular with respect to 100 parts by mass of the base aluminum particles. Further, the quantity of the total coating-layer is preferably not more than 100 parts by mass, particularly preferably not more than 80 parts by mass. Sufficient corrosion resistance may not be attainable if the quantity of the total coating-layer is less than 5 parts by mass, while the coating-layer may be so excessively thick that reflected light from the metallic pigment is scattered to reduce the brilliance of the coating film if the quantity of the total coating-layer exceeds 100 parts by mass.

In the metallic pigment according to the present invention, the surface of the base aluminum layer may be covered with the coating-layer of the single layer formed by a layer containing a basic polymer or a layer composed of only the basic polymer, or the surfaces of the base aluminum particles may be covered with the coating-layer of the multiple layers formed by the outermost layer and the inner layer of another polymer, while the outermost layer of the coating-layer is formed by a layer containing the basic polymer obtained by polymerization of the monomer having the basic group in either case.

While the layer containing the basic polymer may be formed as a plurality of layers including outermost layer or the inner layer may be formed as a plurality of layers in the present invention, a single coating-layer or a coating-layer of a two-layer structure formed by the inner layer and the outermost layer is preferably employed in view of production efficiency.

In the present invention, a method of forming the coating-layer of a single layer or multiple layers on the surface of the base aluminum particles is not particularly restricted so far as the same is a method capable of forming a uniform coating film of a resin composition on the surfaces of metallic particles, and a well-known method can be employed. More specifically, a method of forming the coating-layer of a target polymer on the surface of the base aluminum particles by dissolving a polymerizable monomer and/or a polymerizable oligomer in an organic solvent in which untreated aluminum particles are dispersed and heating the same under coexistence of a polymerization initiator or the like can be employed, for example.

Either the single layer or the multiple layers can be employed as the coating-layer in the present invention. In a case of forming the coating-layer of the multiple layers, there is a method of forming multiple layers by forming a metallic pigment provided with the single coating-layer by the aforementioned method and thereafter stacking layers one by one by repeating an operation of isolating the metallic pigment by filtration/washing. In addition, there is also a method of continuously forming multiple layers by adding another type of monomer and/or oligomer in an intermediate stage of polymerization of a monomer and/or an oligomer. In the present invention, a metallic pigment having desired corrosion resistance and brilliance can be obtained by either method, and the method of forming the coating-layer is not restricted.

While the aforementioned organic solvent for dispersing untreated aluminum particles is not particularly restricted, a solvent not dissolving a generated basic polymer is preferably employed. More specifically, an isoparaffin-based solvent, a solvent of aliphatic hydrocarbon solvent such as hexane, heptane, octane, nonane, decane, undecane or dodecane, a solvent of aromatic hydrocarbon such as benzene, toluene or xylene, a solvent of ether such as diethyl ether, a solvent of ester such as ethyl acetate or butyl acetate, a solvent of alcohol such as methanol, ethanol, butanol, glycerin or polypropylene glycol or the like can be listed, for example. A single such organic solvent may be employed, or at least two such organic solvents may be employed in a mixed state.

The usage of the organic solvent is preferably at least 300 parts by mass, more preferably at least 400 parts by mass in particular with respect to 100 parts by mass of the base aluminum particles. Further, the usage of the organic solvent is preferably not more than 1200 parts by mass, more preferably not more than 800 parts by mass in particular. The viscosity of the reaction liquid is so excessively increased that the reaction components tend to be difficult to uniformly diffuse if the usage of the organic solvent is less than 300 parts by mass, while there is such a tendency that a large quantity of unreacted monomer remains due to a low monomer concentration even if the reaction time is increased if the usage of the organic solvent exceeds 1200 parts by mass.

The aforementioned polymerization initiator is not particularly restricted but that generally known as a radical generator can be employed. As a specific example, peroxide such as benzoyl peroxide, lauroyl peroxide, isobutyl peroxide or methyl ethyl ketone peroxide or an azo compound such as azobisisobutylonitrile (also abbreviated as "AIBN") can be listed.

The compounding ratio of the polymerization initiator is preferably at least 0.1 parts by mass, more preferably at least 0.5 parts by mass in particular with respect to 100 parts by mass of the coating-layer. Further, the compounding ratio of the polymerization initiator is preferably not more than 10 parts by mass, more preferably not more than 8 parts by mass in particular. Such a problem may arise that polymerization does not progress and the coating-layer is not formed in a planned quantity if the compounding ratio of the polymerization initiator is less than 0.1 parts by mass, while there is such a tendency that polymerization so abruptly progresses that free polymer particles are formed to abruptly increase viscosity of the overall system due to belated adsorption of the generated polymer to the base aluminum particles to result in aggregation of the reaction components as the case may be if the compounding ratio exceeds 10 parts by mass.

The polymerization temperature of the monomer and/or the oligomer is properly set in response to the type of the used polymerization initiator. The half-value period of the polymerization initiator is univocally decided in response to the temperature, and such a temperature is preferable that the half-value period of the polymerization initiator is at least 5 minutes, while such a temperature is more preferable in particular that the half-value period of the polymerization initiator is at least 15 minutes. Further, such a temperature is preferable that the half-value period of the polymerization initiator is not more than 20 hours, and such a temperature is more preferable in particular that the half-value period of the polymerization initiator is not more than 10 hours. When AIBN is employed as the polymerization initiator, for example, half-value periods are 22 hours, 5 hours, 1.2 hours and 0.3 hours at 60°C, 70°C, 80°C and 90°C respectively, and hence a more preferable range of the polymerization temperature is 70 to 90°C. Such a problem may arise that polymerization does not easily progress if such a combination of a polymerization temperature and a polymerization time is employed that the half-value period of the polymerization initiator exceeds 20 hours, while there is such a tendency that polymerization so abruptly progresses that free polymer particles are formed to abruptly increase viscosity of the overall system due to belated adsorption of the generated polymer to the base aluminum particles to result in aggregation of the reaction components as the case may be if such a combination of a polymerization temperature and a polymerization time is employed that the half-value period of the polymerization initiator is shorter than 5 minutes. In order to improve polymerization efficiency, it is favorable to perform the polymerization under an atmosphere of inert gas such as nitrogen, helium or argon.

Slurry containing the metallic pigment resulting from completion of polymerization is converted to paste containing the metallic pigment and the solvent by removing an excess solvent or an unreacted monomer by filtration or centrifugation. The obtained paste may be subjected to solvent washing if necessary. While the paste may thereafter be converted to powder by completely removing the solvent through a drying step, the metallic pigment is generally completed in the paste state in view of operability.

<Surface Modifier>

A surface modifier layer is preferably further formed on the surface of the metallic pigment according to the present invention. This surface modifier layer preferably has an action of orienting the metallic pigment on the surface of a coating film in application of a coating material containing the metallic pigment by reducing affinity between the metallic pigment and another coating component. In this case, the coating film can be supplied with more excellent brilliance. As a preferable polymer forming the surface modifier layer, that at least containing a copolymer comprising a bond unit derived from a fluoric polymerizable monomer having an alkyl fluoride group and another bond unit derived from a polymerizable monomer having a phosphoric acid group or the like can be listed. More preferably, a copolymer comprising the bond unit derived from the said fluoric polymerizable monomer having the alkyl fluoride group and the bond unit derived from the polymerizable monomer having the phosphoric acid group as well as still another bond unit derived from at least one polymerizable monomer is employed.

Further preferably, such a copolymer can be listed that the fluoric polymerizable monomer having the alkyl fluoride group is perfluorooctylethyl acrylate, the polymerizable monomer having the phosphoric acid group is 2-methacryloyloxyethyl acid phosphate or 2-acryloyloxyethyl acid phosphate and the bond unit derived from at least one polymerizable monomer other than the bond unit derived from the fluoric polymerizable monomer having the alkyl fluoride group and the bond unit derived from the polymerizable monomer having the phosphoric acid group is styrene or methyl methacrylate.

In the polymer forming the surface modifier layer, the content of the bond unit derived from the fluoric polymerizable monomer having the alkyl fluoride group is preferably in the range of 1 to 40 mol %, the content of the bond unit derived from the polymerizable monomer having the phosphoric acid group is preferably in the range of 1 to 30 mol % and the number-average molecular weight is preferably set in the range of 1000 to 500000, while the polymer is not particularly restricted. This polymer is preferably a copolymer soluble in a solvent. The content of a bond unit in a fluoric polymerizable polymer can be measured by a flask combustion method-ion chromatography or the like, for example, and the content of the bond unit derived from the polymerizable monomer having the phosphoric acid group can be evaluated by wet acid decomposition-ICP (Inductively Coupled Plasma) analysis or the like, for example. The number-average molecular weight can be evaluated by gel permeation chromatography (GPC) or the like, for example.

<Surface Treatment>

A surface modifier obtained by copolymerization is first dissolved in a solvent, added to the metallic pigment according to the present invention and kneaded. The surface modifier may be directly added in the state of an unpurifed liquid upon completion of copolymerization, or may be added in a state diluted with a dilution solvent. At this time, the metallic pigment may be in a state of solventless powder or paste containing a solvent. The content of the surface modifier is preferably set to 0.1 mass % to 5 mass % with respect to the mass of a nonvolatile component of the metallic pigment, i.e., that obtained by removing the solvent from the metallic pigment. The effect of improving brilliance of the coating film by providing the surface modifier layer tends to insufficiently appear if the content is less than 0.1 mass %, while there is such a tendency that aggregation so easily arises in a later pulverization step that a practical powder metallic pigment is difficult to obtain if the content exceeds 5 mass %. However, the content of the surface modifier is not restricted to this. The solvent for dissolving the surface modifier is not particularly restricted so far as the same is capable of dissolving the surface modifier and exerts no bad influence on the properties of the metallic pigment.

The usage of the solvent is preferably set to 10 mass % to 400 mass % with respect to the nonvolatile component of the metallic pigment. There is such a tendency that uniform kneading is difficult if the usage is less than 10 mass %, while there is such a tendency that a large quantity of poor solvent must be used in a dispersion step described later and hence production efficiency is deteriorated if the usage exceeds 400 mass %. If the metallic pigment is used as the paste containing the solvent, attention must be given to calculation of the quantity of the solvent added with the surface modifier. Since the surface modifier solution and the paste are kneaded, a mixed solvent is employed in the mixed system. Unless the mixed solvent has a composition dissolving the surface modifier, the surface modifier is precipitated in the process of kneading and inhibited from uniform adsorption to the metallic pigment. Therefore, the usage of the solvent is preferably set to provide a composition sufficiently dissolving the surface modifier in the mixed system.

When a surface modifier having a phosphoric acid group is used, phosphoric acid group portions in surface modifier molecules are conceivably adsorbed to the metallic pigment in the process of kneading of the metallic pigment and the surface modifier. While this adsorption can be rendered more reliable when a method of aging the paste after completion of kneading or a method performing warm kneading or warm aging is employed, the effect of the surface modifier sufficiently appears without specific operation and hence the present invention is not particularly restricted.

Such surface modifier-containing paste can be obtained by the aforementioned method that the surface modifier layer is further formed on the surface of the metallic pigment according to the present invention. In order to powder this paste, a technique of filtrating and drying a material prepared by dispersing this paste in a poor solvent with respect to the surface modifier is encouraged. If the paste is dried as such, particles of the metallic pigment may be bonded to each other to aggregate. While sufficiently utilizable powder can be obtained by re-crushing also in this case, such a problem may arise that the metallic pigment is partially deformed in crushing. While the aforementioned problem of aggregation can be avoided by washing the paste with a good solvent and drying the same, there is such a tendency that the adsorbed surface modifier is also gradually washed out and the effect resulting from the provision of the surface modifier layer cannot be sufficiently attained.

When the surface modifier-containing paste is gradually introduced into a large quantity of strongly stirred poor solvent for forming slurry and this slurry is filtrated and dried, the problem of deformation or aggregation of the metallic pigment or elution of the surface modifier can be avoided. In other words, the metallic pigment is so dispersed in the dispersion solvent that the particles thereof are not in contact with each other. At the same time, the poor solvent extracts a good solvent so that the surface modifier is precipitated on the surface of the metallic pigment as a solid, whereby no mutual bonding results also when the particles of the metallic pigment provided with the surface modifier layer come into contact with each other again. Alkane such as hexane, heptane or Merveille is preferable as the poor solvent for the surface modifier.

<Powder Coating Material Preparation Method>

The metallic pigment according to the present invention can form a powder coating material when blended into resin powder such as thermosetting resin powder, for example. The type of the resin powder is not particularly restricted but thermosetting resin powder of a resin composition containing resin melted by heating and thereafter quickly solidified and exerting no influence on the metallic pigment according to the present invention can be preferably employed.

Well-known thermosetting resin powder for powder coating can be particularly preferably employed as the thermosetting resin powder. As a specific example, powder of a resin composition containing acrylic resin or polyester resin can be listed. A hardener, a disperser or the like may be added to the thermosetting resin powder employed for the powder coating material of the present invention if necessary.

The hardener addable to the thermosetting resin powder is not particularly restricted but a well-known hardener can be used. As a specific example, amine, polyamide, dicyandiamide, imidazole, dihydrazide carboxylate, acid anhydride, polysulfide, boron trifluoride, amino resin, triglycidyl isocyanate, primide, epoxy resin, other dibasic acid, imidazolyn, hidrazide, an isocyanate compound or the like can be listed. A single such hardener may be employed, or at least two such hardeners may be employed in a mixed state. Further, this hardener can also be employed along with an accelerator if necessary.

The disperser addable to the thermosetting resin powder is not particularly restricted but a well-known disperser can be used. As a specific example, a surface-active agent of phosphate, amine, polyoxyethylene alkyl ether, polyoxyethylene alkyl phenyl ether or the like can be listed. A single such disperser may be employed, or at least two such dispersers may be employed in a mixed state.

In addition to the above, a filler of calcium carbonate, barium sulfate or talc, a flowability regulator of silica, alumina or aluminum hydroxide, a coloring pigment such as titanium oxide, carbon black, iron oxide, copper phthalocyanine, an azo pigment or a condensed polycyclic pigment, a flow leveler such as an acrylic oligomer or silicone, a foaming inhibitor such as benzoin, an additive such as wax, a coupling agent, an antioxidant or magnetic powder and a functional material may be added to the thermosetting resin powder if necessary.

The average particle diameter of the thermosetting resin powder employed for the powder coating material according to the present invention is not particularly restricted but is preferably at least 5 $\mu$m, more preferably at least 15 $\mu$m in particular. Further, this average particle diameter is preferably not more than 100 $\mu$m, more preferably not more than 60 $\mu$m in particular. If the average particle diameter of the thermosetting resin powder is less than 5 $\mu$m, uniform dusting may be so difficult in powder coating that a block of resin adheres to a coated plate and smoothness is lost. If the average particle diameter of the thermosetting resin powder exceeds 100 $\mu$m, on the other hand, smoothness of the surface of the powder-coated coating film may be so inhibited that no excellent appearance can be obtained.

In the powder coating material according to the present invention, the content of the metallic pigment according to the present invention is preferably at least I part by mass, more preferably at least 2 parts by mass in particular with respect to 100 parts by mass of the thermosetting resin powder employed in the present invention. Further, the content of this metallic pigment is preferably not more than 40 parts by mass, more preferably not more than 20 parts by mass in particular. If this content is less than 1 part by mass, no sufficient metallic feel and brightness may be attainable and there is such a tendency that the thickness of the coating film must be increased in order to conceal a substrate. If this content exceeds 40 parts by mass, on the other hand, the cost is increased, while there is such a tendency that smoothness of the coating film is lost to deteriorate the appearance.

A method of preparing the powder coating material according to the present invention is not particularly restricted but a method of preparing a powder coating material by simply dry-blending the metallic pigment with the thermosetting resin powder for powder coating or the like can be preferably employed.

<Powder Coating Method>

As a method of applying the powder coating material according to the present invention, it is preferable to previously blast the surface of a substrate to be coated, stick the powder coating material after performing well-known treatment such as chemical conversion and thereafter heat/harden the powder coating material. While fluidized-bed coating, electrostatic powder coating or the like can be applied as a method of sticking the powder coating material to the surface of the substrate, electrostatic powder coating is superior in coating efficiency and more preferable. A well-known system such as a corona discharge system or a frictional electrification system can be employed as the system of electrostatic powder coating.

The heating temperature for heating/hardening the powder coating material, properly settable in response to the type of the employed thermosetting resin powder, may be generally set to at least 120°C, preferably 150 to 230°C. The heating time, properly selectable in response to the heating temperature, may be generally set to at least one minute, preferably 5 to 30 minutes. The thickness of the coating film formed by heating, not restrictive, is generally about 20 to 100 $\mu$m.

<Method of Evaluating Brilliance of Coating Film>

In the present invention, brightness of the coating film can be evaluated with an evaluation parameter $\beta/\alpha$. This evaluation parameter, i.e., $\beta/\alpha$ results from the following expression (1):

$$\text{Expression (1)}: L = [\beta/(\theta 2 + \alpha)] + \gamma$$

where L represents a lightness index (L*a*b* colorimetric system (color system based on a uniform color space set by CIE in 1976) measured with a spectrophotometer (trade name "X-Rite MA68" by X-Rite) at an observation angle $\theta$, $\theta$ represents the observation angle, and $\alpha$, $\beta$ and $\gamma$ represent constants.

The first item of the expression (1) corresponds to directional scattering specific to the metallic pigment depending on the observation angle $\theta$, and the second item corresponds to isotropic scattering not dependent on the observation angle $\theta$. Visual brilliance highly correlates with an L value on a direct reflection position ($\theta = 0$) of directional scattering, i.e. $\beta/\alpha$, and hence $\beta/\alpha$ is used as the evaluation parameter for brightness.

In order to calculate $\beta/\alpha$, $\alpha$, $\beta$ and $\gamma$ must be first decided. According to the present invention, $\alpha$, and $\gamma$ can be decided by the method of least squares by measuring actual L values at observation angles $\theta$ of 15 degrees, 25 degrees, 45 degrees, 75 degrees and 110 degrees and assuming that the relation between these 0 and L values satisfies the expression (1).

<Corrosion Resistance Evaluation>

The term corrosion resistance employed in the present invention indicates chemical resistance (alkali resistance and acid resistance) and weather resistance, aluminum is particularly easily corroded by alkali, and evaluation of chemical resistance, particularly alkali resistance is suitable as evaluation of the metallic pigment according to the present invention based on aluminum itself.

The metallic pigment according to the present invention can simultaneously provide excellent corrosion resistance and high brilliance, whereby a coating composition employing the metallic pigment according to the present invention is applicable to coating in various industrial fields, and preferably utilized for coating of the bodies of automobiles or the like, office supplies, household goods, sporting equipment, agricultural chemical materials, electric appliances or the like, for example.

[Examples]

While the present invention is now described in more detail with reference to Examples, the present invention is not restricted to these.

<Example 1 >

First, metallic pigment paste (trade name 7640NS by Toyo Aluminum Kabushiki Kaisha) prepared from paste of aluminum flakes was washed with mineral spirit and filtrated. The content of a nonvolatile component in the paste subjected to washing and filtration was 70.0 mass %.

599.5 g of mineral spirit was added to 171.4 g of this paste in a separable flask of 1 liter and stirred for preparing slurry. While stirring was continued, the system was purged with nitrogen gas to be under a nitrogen atmosphere and thereafter heated to 80°C. The following operations were performed while maintaining these conditions unless otherwise stated.

0.85 g of acrylic acid, 8.3 g of epoxidized 1,2-polybutadiene diluted to 50 mass % with mineral spirit, 9.5 g of trimethylolpropane triacrylate, 3.8 g of divinylbenzene and 0.67 g of azobisisobutylonitrile (AIBN) were added. The mixture was reacted for 4 hours after addition of the monomers and AIBN, while 1.3 g of dimethylaminoethyl methacrylate, 0.6 g of trimethylolpropane triacrylate, 5.81 g of mineral spirit and 0.05 g of AIBN were thereafter added and the mixture was further reacted for 2 hours. After the reaction was completed by cooling, the mixture was filtrated and washed with a small quantity of mineral spirit, thereby obtaining metallic pigment paste. The content of a nonvolatile component was 52.8 mass %, and the quantity of coating resin, i.e., the quantity of the coating-layer according to the present invention was 12.0 g per 100 g of aluminum flakes. The obtained paste was partially washed/filtrated with hexane, pulverized by natural seasoning and thereafter passed through a screen of 100 $\mu$m in aperture, for preparing a metallic pigment for powder coating. This metallic pigment is hereinafter referred to as a pigment A.

<Comparative Example>

First, metallic pigment paste (trade name 7640NS by Toyo Aluminum Kabushiki Kaisha) prepared from paste of aluminum flakes was washed with mineral spirit and filtrated. The content of a nonvolatile component in the paste subjected to washing and filtration was 65.2 mass %.

589.4 g of mineral spirit was added to 184.1 g of this paste in a separable flask of 1 liter and stirred for preparing slurry. While stirring was continued, the system was purged with nitrogen gas to be under a nitrogen atmosphere and thereafter heated to 80°C. The following operations were performed while maintaining these conditions unless otherwise stated.

0.92 g of acrylic acid, 9.0 g of epoxidized 1,2-polybutadiene diluted to 50 mass % with mineral spirit, 10.4 g of trimethylolpropane triacrylate, 4.2 g of divinylbenzene and 0.68 g of azobisisobutylonitrile (AIBN) were added. The mixture was reacted for 6 hours after addition of the monomers and AIBN. After the reaction was completed by cooling, the mixture was filtrated and washed with a small quantity of mineral spirit, thereby obtaining metallic pigment paste. The content of a nonvolatile component was 55.7 mass %, and the quantity of coating resin was 14.5 g per 100 g of aluminum flakes. The obtained paste was partially washed/filtrated with hexane, pulverized by natural seasoning and thereafter passed through a screen of 100 $\mu$m in aperture, for preparing a metallic pigment for powder coating. This metallic pigment is hereinafter referred to as a pigment B.

<Surface Modifier>

476 g of perfluorooctyl ethyl acrylate (Light Acrylate FA-108 by Kyoeisha Chemical Co., Ltd.), 66g of 2-methacryloyl oxyethyl acid phosphate (Light Ester P-1M by Kyoeisha Chemical Co., Ltd.), 492 g of methyl methacrylate and 4140 g of cyclohexanone were introduced into a separable flask of 5 liters and sufficiently stirred for obtaining a homogeneous solution. 10 g of AIBN was added as a polymerization initiator and stirred/dissolved, and the system was thereafter sufficiently substituted by nitrogen. The mixture was stirred and reacted at 60°C for 20 hr, thereby obtaining a viscous homogeneous transparent polymer solution. This solution is hereinafter referred to as a surface modifier solution. 20.3 g of this surface modifier solution was dropped on 1700 ml of vigorously stirred methanol, for precipitating the polymer. This dispersion was centrifuged, thereby separating a polymer like gum and a transparent solution from each other. The obtained polymer like gum was remelted with 25 g of acetone and dropped on 1500 ml of vigorously stirred hexane, for precipitating the polymer. This was recovered by filtration and thereafter vacuum-dried, thereby obtaining 3.1 g of polymer. From this result, the polymer concentration in the aforementioned surface modifier solution was calculated as 15.4 mass %.

<Example 2>

3.6 g of the said surface modifier solution was diluted with 66.0 g of cyclohexanone, added to 70.0 g of the paste obtained in Example 1 and kneaded at the room temperature for 20 minutes for obtaining slurry. The obtained slurry was introduced little by little into 1 liter of vigorously stirred heptane and dispersed. A cake obtained after filtrating the dispersion and washing/filtrating the same with heptane was spread on a vat and naturally seasoned for one night. Dried metallic pigment powder was passed through a screen of 100 $\mu$m in aperture for obtaining a metallic pigment for powder coating. This metallic pigment is hereinafter referred to as a pigment C. Table 1 shows the quantity (mass %) of the surface modifier with respect to the metallic pigment in the pigment C.

<Comparative Example 2>

21.7 g of the said surface modifier solution was diluted with 252.8 g of cyclohexanone, added to 400.0 g of the paste obtained in comparative example and kneaded at the room temperature for 20 minutes for obtaining slurry. The obtained slurry was introduced little by little into 2.3 liters of vigorously stirred heptane and dispersed. A cake obtained after filtrating the dispersion and washing/filtrating the same with heptane was spread on a vat and naturally seasoned for one night. Dried metallic pigment powder was passed through a screen of 100 $\mu$m in aperture for obtaining a metallic pigment for powder coating. This metallic pigment is hereinafter referred to as a pigment D. Table 1 shows the quantity (mass %) of the surface modifier with respect to the metallic pigment in the pigment D.

<Comparative Example 3>

Metallic pigment paste (trade name 7640NS by Toyo Aluminum Kabushiki Kaisha) prepared from paste of aluminum flakes was washed with mineral spirit and filtrated. The content of a nonvolatile component in the paste subjected to washing and filtration was 70.2 mass %.

27.3 g of the said surface modifier solution was diluted with 360.1 g of cyclohexanone, added to 400.0 g of the paste obtained in comparative example 1 and kneaded at the room temperature for 20 minutes for obtaining slurry. The obtained slurry was introduced little by little into 2.3 liters of vigorously stirred heptane and dispersed. A cake obtained after filtrating the dispersion and washing/filtrating the same with heptane was spread on a vat and naturally seasoned for one night. Dried metallic pigment powder was passed through a screen of 100 $\mu$m in aperture for obtaining a metallic pigment for powder coating. This metallic pigment is hereinafter referred to as a pigment E. Table 1 shows the quantity (mass %) of the surface modifier with respect to the metallic pigment in the pigment E.

<Preparation of powder Metallic Coating Material and Powder Coating>

These metallic pigments (A) to (E) were blended with polyester-based thermosetting resin powder (trade name Teodur PE 785-900 by Kuboko Paint Co., Ltd.) for preparing powder metallic coating materials. Blending ratios, i.e., the contents (g) of the metallic pigments with respect to 100 g of the thermosetting resin powder were set to satisfy such conditions that coated plates are completely concealed by the metallic pigments and the surfaces are smooth. Table I shows the blending ratios.

The obtained powder metallic coating materials were applied to substrates formed by tin plates having sizes of 100 by 200 mm with a corona discharge electrostatic powder coater (MXR-100VT-mini by Matsuo Sangyo Co., Ltd.) under a condition of an applied voltage of 80 kV and baked at 190°C for 20 minutes, thereby preparing coated plates.

<Evaluation of Brightness of Coating Film>

Actual L values of coating films formed on the coated plates were measured at observation angles θ of 15 degrees, 25 degrees, 45. degrees, 75 degrees and 110 degrees with a spectrophotometer (trade name "X-Rite MA-68" by X-Rite). Then, values of β/α were calculated from the measured values on the basis of the following expression (1), for evaluating brightness of the coating films. Brightness is improved as β/α is increased.

$$L = [\beta/(\theta2 + \alpha)] + \gamma \ldots \text{ Expression (1)}$$

Table 1 shows the obtained values of β/α.

In the expression (1), L represents a lightness index (L*a*b* colorimetric system which is a colorimetric system based on a uniform color space set by CIE in 1976) measured with a spectrophotometer (trade name "X-Rite MA68" by X-Rite) at an observation angle θ, θ represents the observation angle, and α, β and γ represent constants.

In order to calculate β/α, α, β and γ must be first decided. Therefore, α, β and γ were decided by the method of least squares by measuring actual L values at observation angles θ of 15 degrees, 25 degrees, 45 degrees, 75 degrees and 110 degrees and assuming that the relation between these θ and L values satisfies the expression (1).

<Corrosion Resistance Evaluation>

Corrosion resistance of the coated plates prepared in the above was evaluated through alkali resistance. The coated plates obtained by the aforementioned coating method were dipped in 0.1 N of aqueous NaOH solution at 55°C for 4 hours. Thereafter the coated plates were washed with water, dried and subjected to color measuring through the aforementioned method. From the values of β/α before and after dipping in the alkaline solution, alkali resistance was evaluated as brilliance retention according to an expression (2):

$$\text{Brilliance Retention (\%)} = (\beta/\alpha \text{ after dipping in alkaline solution})/(\beta/\alpha \text{ before dipping in alkaline solution}) \times 100 \ldots \text{ Expression (2)}$$

Table 1 shows the results.

Table 1

|  | Example 1 | Example 2 | Comparative Example 1 | Comparative Example 2 | Comparative Example 3 |
|---|---|---|---|---|---|
| Blended Pigment | Pigment A | Pigment C | Pigment B | Pigment D | PigmentE |

(continued)

| | Example 1 | Example 2 | Comparative Example 1 | Comparative Example 2 | Comparative Example 3 |
|---|---|---|---|---|---|
| Quantity of Coating Resin (g) with respect to 100 g of Aluminum Flakes | 12.0 | 12.0 | 14.5 | 14.5 | 0.0 |
| Quantity of Surface Modifier (mass %) with respect to Metallic Pigment | 0.0 | 1.5 | 0.0 | 1.5 | 1.5 |
| Content of Metallic Pigment (PHR) with respect to 100 g of Thermosetting Resin Powder | 5 | 7 | 9 | 5 | 7.5 |
| Brilliance of Coating Film ($\beta/\alpha$) | 149.2 | 294.8 | 154.0 | 247.4 | 303.8 |
| Brilliance Retention (%) | 79 | 77 | 70 | 67 | 58 |

From the results shown in Table 1, brilliance and corrosion resistance of the coating film are not reduced in Example 1 provided with the coating-layer according to the present invention as compared with comparative example 1 provided with the coating-layer formed by polymerizing the monomer having no basic group, and the corrosion resistance is superior as compared with comparative example 1. In Example 2 prepared by providing the coating-layer according to the present invention and thereafter further providing the surface modifier layer, brilliance and corrosion resistance of the coating film are remarkably superior as compared with comparative example 2 prepared by providing the coating-layer formed by polymerizing the monomer having no basic group and thereafter further providing the surface modifier layer, and the corrosion resistance is remarkably superior also as compared with comparative example 3 prepared by providing the surface modifier layer without providing the coating-layer.

Thus, it is understood that the metallic pigment according to the present invention is a metallic pigment exhibiting excellent corrosion resistance also when the surface modifier layer is provided for improving brightness, for obtaining a coating film compatibly having high brightness and corrosion resistance.

The embodiment and Examples disclosed this time must be considered illustrative in all points and not restrictive. The range of the present invention is shown not by the above description but by the scope of claim for patent, and it is intended that all modifications within the meaning and range equivalent to the scope of claim for patent are included.

INDUSTRIAL APPLICABILITY

The metallic pigment according to the present invention is preferably applicable to a coating material, particularly a powder coating material, and can simultaneously supply excellent corrosion resistance without damaging metallic feel and high brightness in a case of forming the surface modifier layer.

Claims

1.  A metallic pigment composed of aluminum particles serving as base particles and formed with a coating-layer of multiple layers covering the surfaces of said aluminum particles, **characterized in that**
    the outermost layer of said coating-layer contains a polymer obtained by polymerizing a monomer having a basic group and at least one polymerizable double bond,
    at least one layer of said coating-layer other than the outermost layer is composed of a copolymer obtained by polymerizing at least two materials selected from a group consisting of oligomers and monomers each having at least one polymerizable double bond and
    a surface modifier layer is formed on the outer side of said coating-layer, and said surface modifier layer contains a copolymer comprising a bond unit derived from a fluoric polymerizable monomer having an alkyl fluoride group and another bond unit derived from a polymerizable monomer having a phosphoric acid group.

2. The metallic pigment according to claim 1, wherein
said monomer having said basic group and at least one polymerizable double bond is a compound containing nitrogen.

3. The metallic pigment according to claim 1, wherein
said coating-layer is formed to be in the range of 5 to 100 parts by mass with respect to 100 parts by mass of aluminum particles.

4. A coating material containing the metallic pigment according to any of claims 1 to 3.

**Patentansprüche**

1. Metallpigment, bestehend aus Aluminiumpartikeln, die als Basispartikel dienen, und gebildet mit einer Überzugsschicht aus mehreren Schichten, die die Oberflächen der Aluminiumpartikel überziehen, **dadurch gekennzeichnet, dass**
die äußerste Schicht der Überzugsschicht ein Polymer enthält, das durch Polymerisieren eines Monomers erhalten wird, welches eine basische Gruppe und mindestens eine polymerisierbare Doppelbindung aufweist,
mindestens eine Schicht der Überzugschicht, abgesehen von der äußersten Schicht, aus einem Copolymer besteht, das durch Polymerisieren von mindestens zwei Materialien erhalten wird, die aus einer Gruppe gewählt sind, die aus Oligomeren und Monomeren besteht, die jeweils mindestens eine polymerisierbare Doppelbindung aufweisen, und
eine Oberflächenmodifikationsschicht auf der Außenseite der Überzugsschicht ausgebildet ist, und die Oberflächenmodifikationsschicht ein Copolymer enthält, das eine Bindungseinheit aufweist, die von einem fluorhaltigen polymerisierbaren Monomer mit einer Alkylfluoridgruppe stammt, und eine weitere Bindungseinheit aufweist, die von einem polymerisierbaren Monomer mit einer Phosphorsäuregruppe stammt.

2. Metallpigment nach Anspruch 1, wobei
das Monomer, welches die basische Gruppe und mindestens eine polymerisierbare Doppelbindung aufweist, eine Stickstoff enthaltende Verbindung ist.

3. Metallpigment nach Anspruch 1, wobei
die Überzugsschicht so ausgebildet ist, dass sie im Bereich von 5 bis 100 Massenteilen liegt, bezogen auf 100 Massenteile von Aluminiumpartikeln.

4. Überzugsmaterial, welches das Metallpigment nach einem der Ansprüche 1 bis 3 enthält.

**Revendications**

1. Pigment métallique composé de particules d'aluminium servant de particules de base et formé avec une couche de revêtement de multiples couches couvrant les surfaces desdites particules d'aluminium, **caractérisé en ce que**
la couche la plus externe de ladite couche de revêtement contient un polymère obtenu par polymérisation d'un monomère ayant un groupe basique et au moins une double liaison polymérisable,
au moins une couche de ladite couche de revêtement autre que la couche la pius externe est composée d'un copolymère obtenu par polymérisation d'au moins deux matériaux choisis dans un groupe constitué par les oligomères et les monomères ayant chacun au moins une double liaison polymérisable, et
une couche de modification de surface est formée sur le côté externe de ladite couche de revêtement, et ladite couche de modification de surface contient un copolymère comprenant un motif de liaison dérivé d'un monomère fluoré polymérisable ayant un groupe fluorure d'alkyle et un autre motif de liaison dérivé d'un monomère polymérisable ayant un groupe acide phosphorique.

2. Pigment métallique selon la revendication 1, dans lequel
ledit monomère ayant ledit groupe basique et au moins une double liaison polymérisable est un composé contenant de l'azote.

3. Pigment métallique selon la revendication 1, dans lequel
ladite couche de revêtement est formée pour se trouver dans la plage de 5 à 100 parties en masse pour 100 parties en masse de particules d'aluminium.

4. Matériau de revêtement contenant le pigment métallique selon l'une quelconque des revendications 1 à 3.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 51137725 A
- JP 57035214 A
- JP 9071734 A
- US 4138511 A
- WO 02094950 A
- JP 64040566 B
- EP 1655349 A1
- US 02094950 A